(19) Europäisches Patentamt
European Patent Office
Office européen des brevets

(11) **EP 4 173 071 B1**

(12) **EUROPÄISCHE PATENTSCHRIFT**

(45) Veröffentlichungstag und Bekanntmachung des Hinweises auf die Patenterteilung:
**31.01.2024  Patentblatt 2024/05**

(21) Anmeldenummer: **21732231.2**

(22) Anmeldetag: **08.06.2021**

(51) Internationale Patentklassifikation (IPC):
**G01K 7/42** (2006.01)        **H01M 10/48** (2006.01)
**H01M 10/42** (2006.01)

(52) Gemeinsame Patentklassifikation (CPC):
**G01K 7/427; H01M 10/425; H01M 10/486;**
H01M 2010/4278; H01M 2220/20; Y02E 60/10;
Y02T 10/70

(86) Internationale Anmeldenummer:
**PCT/EP2021/065363**

(87) Internationale Veröffentlichungsnummer:
**WO 2022/002539 (06.01.2022 Gazette 2022/01)**

(54) **VERFAHREN ZUM BESTIMMEN DER JEWEILIGEN TEMPERATUR MEHRERER BATTERIEZELLEN EINER FAHRZEUGBATTERIE DURCH EXTRAPOLATION EINER GEMESSENEN TEMPERATUR; UND ENTSPRECHENDE STEUEREINRICHTUNG**

METHOD FOR DETERMINING THE RESPECTIVE TEMPERATURE OF A PLURALITY OF BATTERY CELLS OF A VEHICLE BATTERY THROUGH EXTRAPOLATION OF A MEASURED TEMPERATURE; AND CORRESPONDING CONTROL DEVICE

PROCÉDÉ DE DÉTERMINATION DE LA TEMPÉRATURE RESPECTIVE D'UNE PLURALITÉ D'ÉLÉMENTS DE BATTERIE D'UNE BATTERIE DE VÉHICULE PAR EXTRAPOLATION D'UNE TEMPÉRATURE MESURÉE; ET DISPOSITIF DE COMMANDE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2020  DE 102020003887**

(43) Veröffentlichungstag der Anmeldung:
**03.05.2023  Patentblatt 2023/18**

(73) Patentinhaber: **Mercedes-Benz Group AG**
**70372 Stuttgart (DE)**

(72) Erfinder:
• **FILL, Alexander**
**70176 Stuttgart (DE)**
• **AVDYLI, Arber**
**73262 Reichenbach an der Fils (DE)**

(74) Vertreter: **Novagraaf Group**
**Chemin de l'Echo 3**
**1213 Onex / Geneva (CH)**

(56) Entgegenhaltungen:
EP-A1- 3 008 771          DE-A1-102011 102 360
DE-A1-102011 116 779      DE-A1-102016 111 547
US-A1- 2017 012 327

**Beschreibung**

Verfahren zum Bestimmen der jeweiligen Temperatur mehrerer Batteriezellen einer Fahrzeugbatterie durch Extrapolation einer gemessenen Temperatur; Steuereinrichtung sowie Fahrzeugbatterie Die Erfindung betrifft ein Verfahren zum Bestimmen der jeweiligen Temperatur mehrerer Batteriezellen einer Fahrzeugbatterie. Weiterhin betrifft die Erfindung eine entsprechende Steuereinrichtung.

Für eine erfolgreiche Kommerzialisierung elektrisch betreibbarer Kraftfahrzeuge müssen diese die hohen Erwartungen und Erfordernisse erfüllen, welche durch konventionelle kraftstoffbetriebene Kraftfahrzeuge hinsichtlich Lebensdauer, Leistungsfähigkeit, Reichweite und Sicherheit bereits erfüllt werden, ermöglicht werden. Beispiele für elektrisch betreibbare Kraftfahrzeuge sind reine Elektrofahrzeuge, welche ausschließlich einen elektrischen Energiespeicher und einen oder mehrere Elektromotoren aufweisen, Hybrid-Fahrzeuge, welche einen Verbrennungsmotor, einen elektrischen Energiespeicher und einen oder mehrere Elektromotoren aufweisen, sowie Wasserstoff-Fahrzeuge, welche beispielsweise eine Brennstoffzelle, einen elektrischen Energiespeicher und eine oder mehrere Elektromotoren aufweisen. Ein elektrischer Energiespeicher eines Kraftfahrzeugs kann auch als Fahrzeugbatterie und/oder Traktionsbatterie bezeichnet werden. Eine Fahrzeugbatterie setzt sich zusammen aus einer Vielzahl an Batteriezellen, welche untereinander in Serie und/oder parallel geschaltet sind. Die Vielzahl an Batteriezellen ist dazu ausgebildet, elektrische Energie gemeinsam zu speichern beziehungsweise eine elektrische Leistung gemeinsam bereitzustellen. Die Batteriezellen einer Fahrzeugbatterie können alle in Reihe geschaltet sein. Vorteilhafterweise ist es jedoch vorgesehen, dass mehrere Batteriezellen in Reihe zueinander geschaltet sind und eine Gruppe ergeben, wobei mehrere solcher Gruppen parallel geschaltet sind. Durch die nominelle Spannung der einzelnen Batteriezellen sowie die Anzahl in Reihe geschalteter Batteriezellen ergibt sich das nominelle Spannungsniveau der Fahrzeugbatterie. Vorzugsweise beträgt das nominelle Spannungsniveau zumindest 80 Volt, bevorzugt zumindest 200 Volt, beispielsweise 400 Volt oder 800 Volt.

Um einen effizienten und sicheren Betrieb der Fahrzeugbatterie beziehungsweise des Kraftfahrzeugs mit der Fahrzeugbatterie zu gewährleisten, ist insbesondere vorgesehen, dass die Fahrzeugbatterie kontinuierlich überwacht wird. Beispielsweise wird im Rahmen dessen die jeweilige Temperatur, Spannung, Strom, Ladezustand (state of charge, SoC) und/oder Abnutzungsgrad oder Degradation (state of health, SoH) überprüft. Dabei ist eine beliebige Kombination der beispielhaft genannten Größen möglich. Es ist äußerst vorteilhaft, die jeweilige Temperatur jeder der Batteriezellen bei einem Betrieb dauerhaft zu prüfen beziehungsweise zu bestimmen und zu überwachen. Dies gilt analog für den Abnutzungsgrad beziehungsweise die Degradation (SoH).

Die Anordnung eines jeweiligen Temperatursensors an jeder Batteriezelle ist dabei äußerst kompliziert und kostenintensiv. Aus diesem Grund werden häufig Korrelationen zwischen den genannten Größen und dem Innenwiderstand der jeweiligen Batteriezellen ausgenutzt. Insbesondere kann aus dem Innenwiderstand auf die Temperatur und/oder die Degradation der jeweiligen Batteriezelle geschlossen werden.

Beispielsweise kann der Innenwiderstand einer jeweiligen Batteriezelle mittels eines Strompuls-Messverfahrens, welches eine Korrelation einer Spannungsantwort auf einen Strompuls ausnutzt, herangezogen werden. Hierfür ist ein geringer Berechnungsaufwand nötig. Allerdings können derart bestimmte Werte nur unregelmäßig bereitgestellt werden. Ein alternatives Verfahren nutzt ein adaptives Modell, beispielsweise ein sogenanntes elektrisches Schaltkreismodell (Electric Circuit Model, ECM). Dies beruht insbesondere auf einem Kalmanfilter.

Druckschrift EP 3 008 771 A1 offenbart ein Verfahren zur Berechnung der Temperatur einer Fahrzeugbatterie ohne einen Temperatursensor zu verwenden. Die Schätzung erfolgt vielmehr anhand eines Impuls-Antwort-Modells.

Druckschrift US 2017/012327 A1 schlägt vor, die Innentemperatur einer Sekundärbatterie anhand von Strom-, Spannung- und Außentemperaturmesswerten zu berechnen.

Druckschrift DE 10 2011 116779 A1 zeigt die Berechnung der Kerntemperatur einer Fahrzeugbatterie anhand von Strom-, Spannungs- und Oberflächentemperaturmesswerten.

Druckschrift DE 10 2011 102360 A1 offenbart die Berechnung der Kerntemperatur einer Fahrzeugbatterie anhand von Strom-, Ladezustands- und Oberflächentemperaturmesswerten.

Druckschrift DE 10 2016 111547 A1 beschreibt ein Innenwiderstandsschätzverfahren für eine Sekundärbatterie, wobei ein anfänglicher Innenwiderstandswert und eine Temperaturverlaufsinformation erfasst, und daraus ein aktueller Innenwiderstandswert geschätzt wird.

Es ist Aufgabe der vorliegenden Erfindung, eine verbesserte Überwachung der Temperatur jeweiliger Batteriezellen einer Fahrzeugbatterie zu ermöglichen.

Diese Aufgabe wird erfindungsgemäße gelöst durch die Gegenstände der unabhängigen Patentansprüche. Vorteilhafte Ausführungsformen mit zweckmäßigen Weiterbildungen sind Gegenstand der Unteransprüche.

Ein erster Aspekt der Erfindung betrifft das Verfahren zum Bestimmen der jeweiligen Temperatur mehrerer Batteriezellen einer Fahrzeugbatterie. Um die verbesserte Überwachung der jeweiligen Temperatur zu ermöglichen, weist das Verfahren die folgenden Schritte auf:

- Bestimmen von Messwerten, welche eine erste Spannung zumindest einer ersten Batteriezelle und eine zweite Spannung zumindest einer zweiten Batteriezelle sowie zumindest einen jeweiligen Strom, der durch die Batteriezellen fließt, umfasst,
- Bestimmen eines ersten Messwiderstands der ersten Batteriezelle und eines zweiten Messwiderstands der zweiten Batteriezelle aus den Messwerten,
- Bestimmen eines Referenzwiderstands,
- Bestimmen eines ersten Widerstandsverhältnisses aus dem ersten Messwiderstand und dem Referenzwiderstand und eines zweiten Widerstandsverhältnisses aus dem zweiten Messwiderstand und dem Referenzwiderstand,
- Bestimmen einer Messtemperatur der ersten Batteriezelle,
- Bestimmen einer Rechentemperatur der zweiten Batteriezelle anhand der Messtemperatur sowie dem ersten Widerstandsverhältnis und dem zweiten Widerstandsverhältnis nach einer vorbestimmten Vorschrift, wobei
- die vorbestimmte Vorschrift eine Verteilungsfunktion und/oder Wertetabelle beinhaltet, welche abhängig von der Messtemperatur sowie dem ersten Widerstandsverhältnis einer Vielzahl an Werten für das zweiten Widerstandsverhältnis genau einen jeweiligen Wert für die Temperatur zuordnet.

Insbesondere erfolgt das Bestimmen der Messwerte durch eine entsprechende Messung mittels einer Messeinrichtung. Die Messeinrichtung kann insbesondere dazu ausgebildet sein, die erste Spannung und/oder die zweite Spannung und/oder den jeweiligen Strom zu messen. Insbesondere ist der jeweilige Strom, der durch die erste Batteriezelle und die zweite Batteriezelle fließt, derselbe, da beide Batteriezellen in Reihe geschaltet sind. Anhand der Messwerte können der erste Messwiderstand und der zweite Messwiderstand bestimmt werden. Das Bestimmen des ersten und zweiten Messwiderstands erfolgt insbesondere anhand einer mathematischen Korrelation zwischen Stromspannung und Widerstand. Beispielsweise erfolgt das Bestimmen des ersten Messwiderstands der ersten Batteriezelle und des zweiten Messwiderstands der zweiten Batteriezelle aus den Messwerten mittels des ohmschen Gesetzes. In weiterer Ausgestaltung können auch kompliziertere mathematische Korrelationen zur Anwendung kommen, wie sie im weiteren Verlauf dieser Anmeldung noch gezeigt werden.

Der Referenzwiderstand kann beispielsweise ein vorbestimmter Wert sein. In diesem Fall kann das Bestimmen des Referenzwiderstands durch Abrufen des vorbestimmten Werts aus einer Speichereinrichtung erfolgen. Alternativ kann der Referenzwiderstand als Durchschnittswert über alle Messwiderstände der mehreren Batteriezellen, beispielsweise dem ersten Messwiderstand und dem zweiten Messwiderstand, gebildet werden. Insbesondere erfolgt das Bestimmen des Referenzwiderstands durch Mitteln beziehungsweise Bilden des Durchschnitts über alle Messwiderstände aller Batteriezellen der Fahrzeugbatterie. Das erste und das zweite Messwiderstandsverhältnis können gebildet werden, indem der jeweilige Messwiderstand, also der erste beziehungsweise der zweite Messwiderstand, durch den Referenzwiderstand geteilt werden. Alternativ kann das erste beziehungsweise zweite Widerstandsverhältnis durch Teilen des Referenzwiderstands durch den ersten beziehungsweise den zweiten Messwiderstand gebildet werden.

Das Bestimmen der Messtemperatur der ersten Batteriezelle kann durch Messen der Temperatur der ersten Batteriezelle erfolgen. Insbesondere erfolgt das Bestimmen beziehungsweise Messen der Messtemperatur mittels eines Temperatursensors. Der Temperatursensor kann beispielsweise als NTC- oder PTC-Sensor ausgebildet sein beziehungsweise einen solchen Sensor umfassen. Alternativ ist auch eine Messung mittels eines Infrarotthermometers möglich. Auch beliebige andere Messmethoden zum Messen einer Temperatur der ersten Batteriezelle sind denkbar. Im Allgemeinen kann die Messtemperatur der ersten Batteriezelle mittels einer Temperaturmesseinheit bestimmt werden.

Das Bestimmen der Rechentemperatur erfolgt basierend auf dem ersten Widerstandsverhältnis und dem zweiten Widerstandsverhältnis sowie der Messtemperatur nach der vorbestimmten Vorschrift. Die Rechentemperatur gibt dabei die Temperatur der zweiten Batteriezelle an, wohingegen die Messtemperatur die gemessene Temperatur der ersten Batteriezelle angibt. Die Rechentemperatur wird als solche bezeichnet, da diese nicht gemessen wird, sondern mittels der vorbestimmten Vorschrift aus den genannten Größen hergeleitet beziehungsweise bestimmt wird.

Die Erfindung beruht auf dem Gedanken, die Temperatur der zweiten Batteriezelle aus der Temperatur der ersten Batteriezelle zu extrapolieren. Für diese Extrapolation wird die Messtemperatur mit dem ersten und dem zweiten Widerstandsverhältnis in Verhältnis gesetzt. Dabei nutzt die Erfindung die Erkenntnis aus, dass der Innenwiderstand einer jeweiligen Batteriezelle mit steigender Temperatur der entsprechenden Batteriezelle sinkt. Somit kann ausgehend von dem jeweiligen Innenwiderstand, also dem ersten und zweiten Messwiderstand, der ersten und zweiten Batteriezelle die Temperatur der ersten Batteriezelle auf die zweite Batteriezelle extrapoliert werden. Dabei wird insbesondere berücksichtigt, dass zwischen der Temperatur und dem jeweiligen Innenwiderstand kein linearer Zusammenhang besteht. Der Zusammenhang zwischen jeweiligem Innenwiderstand und Temperatur ist erfindungsgemäß durch eine Verteilungsfunktion und/oder eine entsprechende Wertetabelle verfügbar.

Der Zusammenhang, d.h. die Verteilungsfunktion beziehungsweise die Wertetabelle, ist dabei vorbestimmt. Insbesondere wird der Zusammenhang, insbesondere die Verteilungsfunktion beziehungsweise die Wertetabelle, durch entsprechende Versuche an einer solchen Fahrzeugbatterie beziehungsweise entsprechender Batteriezellen abgeleitet. Dabei kann eine numerische Erzeugung der Wertetabelle beziehungsweise der Verteilungsfunktion vorgesehen sein. Insgesamt ist dadurch gezeigt, wie eine verbesserte Überwachung der Temperaturen jeweiliger Batteriezellen einer Fahrzeugbatterie ermöglicht werden kann. Insbesondere kann nur eine geringe Anzahl an Temperaturmesseinheiten beziehungsweise Temperatursensoren ausreichend sein, um die jeweilige Temperatur aller Batteriezellen über das erfindungsgemäße Verfahren zu bestimmen. Dies spart einerseits Komplexität beim Aufbau der Fahrzeugbatterie und andererseits Kosten.

Das Verfahren ist im Allgemeinen auch ohne die Schritte des Bestimmens des Referenzwiderstands und des Bestimmens des ersten und zweiten Widerstandsverhältnisses möglich. In diesem Falle könnte die Rechentemperatur abweichend anhand der Messtemperatur sowie dem ersten Messwiderstand und dem zweiten Messwiderstand nach einer entsprechenden vorbestimmten Vorschrift erfolgen. Dabei hat sich jedoch herausgestellt, dass das Setzen ins Verhältnis mit dem Referenzwiderstand, auch als Normieren bezeichnet, zuverlässigere Ergebnisse liefern kann. Dies beruht dabei insbesondere auf der Erkenntnis, dass die absoluten Widerstände nicht von Interesse sind, da die jeweilige Batteriezelle mit dem niedrigsten Innenwiderstand üblicherweise auch die wärmste unter den Batteriezellen ist und diejenige Batteriezelle mit dem höchsten Innenwiderstand üblicherweise auch die kühlste unter den Batteriezellen ist. Da das Bestimmen der Rechentemperatur auch abhängig von der Messtemperatur erfolgt, ist die Betrachtung des jeweiligen auf den Referenzwiderstand normierten Messwiderstands, also dem ersten beziehungsweise zweiten Widerstandsverhältnis, ausreichend. Durch die Normierung wird eine homogenere Datenbasis erreicht.

Erfindungsgemäß ist vorgesehen, dass die vorbestimmte Vorschrift die Verteilungsfunktion und/oder die Wertetabelle beinhaltet, welche abhängig von der Messtemperatur sowie dem ersten Widerstandsverhältnis einer Vielzahl an Werten für das zweite Widerstandsverhältnis einen jeweiligen Wert genau einen jeweiligen Wert für die Temperatur, also die Rechentemperatur, zuordnen. Dabei kann vorgesehen sein, dass die Verteilungsfunktion und/oder die Wertetabelle durch die entsprechenden Tests beziehungsweise Messungen an der Fahrzeugbatterie erzeugt werden. Die Wertetabelle beziehungsweise die Verteilungsfunktion kann durch einen mathematischen Zusammenhang beziehungsweise eine mathematische Formel oder numerisch bereitgestellt sein. Zusätzlich können die Wertetabelle und/oder die Verteilungsfunktion den Entladungszustand der Fahrzeugbatterie und/oder der jeweiligen Batteriezelle als Parameter aufweisen. Mit anderen Worten kann für unterschiedliche Werte des Ladezustands der Fahrzeugbatterie und/oder der jeweiligen Batteriezelle die jeweils gültige Verteilungsfunktion und/oder Wertetabelle herangezogen werden. In diesem Fall kann das Verfahren als zusätzlichen Schritt das Bestimmen eines Ladezustands der Fahrzeugbatterie und/oder der jeweiligen Batteriezelle beinhalten. Auf diese Weise kann eine noch genauere Bestimmung der Temperatur, insbesondere Rechentemperatur der zweiten Batteriezelle, erreicht werden.

Gemäß einer Weiterbildung ist vorgesehen, dass abhängig von dem ersten Widerstandsverhältnis und der Messtemperatur zunächst die Verteilungsfunktion und/oder Wertetabelle normiert wird und anschließend aus der normierten Verteilungsfunktion und/oder Wertetabelle die Rechentemperatur abhängig von dem zweiten Widerstandsverhältnis abgeleitet wird. Mit anderen Worten wird zunächst die Verteilungsfunktion und/oder Wertetabelle anhand der Daten der ersten Batteriezelle, also dem ersten Widerstandsverhältnis und der Messtemperatur ausgewählt beziehungsweise erzeugt und anschließend aus der auf diese Weise erzeugten Verteilungsfunktion und/oder Wertetabelle die Rechentemperatur abhängig von dem zweiten Widerstandsverhältnis ausgewählt. Dabei kann die normierte Verteilungsfunktion und/oder Wertetabelle einen Eins-zu-Eins-Zusammenhang zwischen Rechentemperatur und zweitem Widerstandsverhältnis angeben. Auf diese Weise ist eine einfache Ableitung der Rechentemperatur anhand der normierten Verteilungsfunktion und/oder Wertetabelle möglich. Das Normieren beziehungsweise Erzeugen oder Auswählen der normierten Verteilungsfunktion und/oder Wertetabelle kann insbesondere auch basierend auf vorbestimmten Daten erfolgen.

Gemäß einer Weiterbildung ist vorgesehen, dass ein jeweiliges zweites Widerstandsverhältnis für mehrere zweite Batteriezellen bestimmt und daraus sowie anhand der vorbestimmten Vorschrift, der Messtemperatur und dem ersten Widerstandsverhältnis ein jeweiliger Wert für die Rechentemperatur der jeweiligen zweiten Batteriezelle bestimmt wird. Mit anderen Worten erfolgt das Bestimmen der Rechentemperatur der zweiten Batteriezelle auf analoge Weise für mehrere zweite Batteriezellen parallel. Dabei kann für jede der zweiten Batteriezellen das jeweilige zweite Widerstandsverhältnis zugrundegelegt werden, welches sich aus einem jeweiligen Messwiderstand, der für die jeweilige zweite Batteriezelle bestimmt wird, ableitet. Zur Bestimmung des jeweiligen zweiten Messwiderstandes kann eine jeweilige zweite Spannung für jede der zweiten Batteriezellen bestimmt werden. Es kann ein jeweiliger Strom für jede der zweiten Batteriezellen bestimmt werden, wobei der jeweilige Strom im Falle einer Reihenschaltung für alle zweiten Batteriezellen gleich sein kann. Dabei wird die jeweilige Rechentemperatur der jeweiligen zweiten Batteriezelle jeweils ausgehend von dem ersten Widerstandsverhältnis der ersten Batteriezelle sowie der Messtemperatur der ersten Batteriezelle bestimmt. Mit anderen Worten wird die Rechentemperatur jeder der zweiten Batteriezellen ausgehend von der Messtemperatur der ersten Batteriezelle sowie deren Widerstand beziehungsweise Widerstandsverhältnis extrapoliert. Auf diese Weise kann auf eine Vielzahl an Temperatursensoren verzichtet werden, da für jede der zweiten Batteriezellen kein Temperatursensor mehr nötig ist.

Gemäß einer Weiterbildung ist vorgesehen, dass eine jeweilige Messtemperatur sowie ein jeweiliges erstes Widerstandsverhältnis für mehrere erste Batteriezellen bestimmt und daraus anhand der vorbestimmten Vorschrift und dem zweiten Widerstandsverhältnis ein jeweiliger Wert für die Rechentemperatur der zweiten Batteriezelle bestimmt wird. Mit anderen Worten wird die Rechentemperatur der zweiten Batteriezelle ausgehend von der jeweiligen Messtemperatur und dem jeweiligen ersten Widerstandsverhältnis mehrerer erster Batteriezellen extrapoliert. Insbesondere erfolgt das Bestimmen beziehungsweise Extrapolieren der Rechentemperatur ausgehend von den unterschiedlichen Batteriezellen unabhängig voneinander. Auf diese Weise ergeben sich mehrere Rechentemperaturen der zweiten beziehungsweise In weiter Ausgestaltung kann es vorgesehen sein, dass die mehreren Werte für die Rechentemperatur der zweiten Batteriezelle gemittelt werden. Bevor dieses Mitteln erfolgt, können Ausreißer, also Werte für die Rechentemperatur der zweiten Batteriezelle, welche mehr als ein vorbestimmtes Maß von den übrigen Werten abweichen, herausgefiltert werden. Denn derart stark abweichende Werte beziehungsweise Ausreißer sind mit hoher Wahrscheinlichkeit auf Fehler beim Messen beziehungsweise Fehler beim Bestimmen der Rechentemperatur zurückzuführen. Auf diese Weise kann die Genauigkeit beim Bestimmen der jeweiligen Temperatur der Batteriezellen weiter verbessert werden.

Gemäß einer Weiterbildung ist vorgesehen, dass zumindest eine Messtemperatur einer am Rand der Fahrzeugbatterie angeordneten der mehreren ersten Batteriezellen sowie zumindest eine Messtemperatur einer mittig in der Fahrzeugbatterie angeordneten der mehreren ersten Batteriezellen bestimmt wird. Mit anderen Worten ist ein jeweiliger Temperatursensor beziehungsweise eine jeweilige Temperaturmesseinheit an zumindest einer ersten Batteriezelle angeordnet, die am Rand der Fahrzeugbatterie angeordnet ist, und zumindest ein Temperatursensor beziehungsweise eine Temperaturmesseinheit an einer ersten Batteriezelle angeordnet, die mittig in der Fahrzeugbatterie angeordnet ist. Beispielsweise ist die am Rand der Fahrzeugbatterie angeordnete erste Batteriezelle nur mit einer weiteren Batteriezelle benachbart. Beispielsweise ist die mittig in der Fahrzeugbatterie angeordnete erste Batteriezelle zu mehreren Seiten mit einer jeweiligen weiteren Batteriezelle benachbart. Auf diese Weise ergeben sich unterschiedliche Temperaturmesswerte für unterschiedliche Einbausituationen der unterschiedlichen ersten Batteriezellen. Dies ermöglicht eine noch genauere Bestimmung der Messtemperatur und somit auch der daraus abgeleiteten Rechentemperatur beziehungsweise mehreren Rechentemperaturen.

Gemäß einer Weiterbildung ist vorgesehen, dass geprüft wird, ob ein Referenzzustand vorliegt, wobei in dem Referenzzustand ein Korrelationskoeffizient G größer ist als ein vorbestimmter Wert und/oder jeweilige Messtemperaturen mehrerer ersten Batteriezellen untereinander ein vorbestimmtes Maß nicht überschreiten. Der Korrelationskoeffizient G gibt insbesondere die Qualität einer Regression der Bestimmung der jeweiligen Messwiderstände an. Dabei stellt der Korrelationskoeffizient G insbesondere einen Qualitätsfaktor, der die Datenqualität der Messwerte beziehungsweise daraus abgeleiteten Widerstandswerte charakterisiert. Der Referenzzustand gilt dabei insbesondere als statischer Zustand, in dem sich die Fahrzeugbatterie in einem statischen Zustand befindet. In dem Referenzzustand beziehungsweise genau dann, wenn der Referenzzustand vorliegt, kann auf die Bestimmung der jeweiligen Temperatur der mehreren Batteriezellen verzichtet werden, da davon ausgegangen werden kann, dass sich diese zeitlich konstant entwickeln. Außerdem können genau dann, wenn der Referenzzustand vorliegt, andere Auswertungen vorgenommen werden. Insbesondere erfolgt eine Quantifizierung der Degradation beziehungsweise einer Veränderung der Degradation der Fahrzeugbatterie verglichen mit früheren Referenzzuständen. Dem liegt die Erkenntnis zugrunde, dass langsame beziehungsweise Langzeitverhalten der Messwerte keine Veränderung der Temperatur der Batteriezellen, sondern eine Veränderung von deren Degradation zur Ursache hat. Daher kann aus diesem Langzeitverhalten auf die Veränderung des Zustandes der Fahrzeugbatterie beziehungsweise einzelnen Zellen beziehungsweise auf deren Degradation geschlossen werden.

Ein zweiter Aspekt der Erfindung betrifft eine Steuereinrichtung zum Bestimmen der jeweiligen Temperatur mehrerer Batteriezellen einer Fahrzeugbatterie, wobei die Steuereinrichtung ausgebildet ist zum:

- Empfangen von Messwerten, welche eine erste Spannung zumindest einer ersten Batteriezelle und zweite Spannung zumindest einer zweiten Batteriezelle sowie zumindest einen jeweiligen Strom, der durch die Batteriezellen fließt, umfasst,
- Bestimmen eines ersten Messwiderstands der ersten Batteriezelle und eines zweiten Messwiderstands der zweiten Batteriezelle aus den Messwerten,
- Bestimmen eines Referenzwiderstands,
- Bestimmen eines ersten Widerstandsverhältnisses aus dem erstem Messwiderstand und dem Referenzwiderstand und eines zweiten Widerstandsverhältnisses aus dem zweiten Messwiderstand und dem Referenzwiderstand,
- Empfangen einer Messtemperatur der ersten Batteriezelle, und
- Bestimmen einer Rechentemperatur der zweiten Batteriezelle anhand der Messtemperatur sowie dem ersten Widerstandsverhältnis und dem zweiten Widerstandsverhältnis nach einer vorbestimmten Vorschrift, wobei
- die vorbestimmte Vorschrift eine Verteilungsfunktion und/oder Wertetabelle beinhaltet, welche abhängig von der Messtemperatur sowie dem ersten Widerstandsverhältnis einer Vielzahl an Werten für das zweiten Widerstandsverhältnis genau einen jeweiligen Wert für die Temperatur zuordnet.

Insbesondere ist die Steuereinrichtung dazu ausgebildet, das erfindungsgemäße Verfahren gemäß einer oder mehrerer der hier beschriebenen Ausführungsformen durchzuführen. Beispielsweise umfasst die Steuereinrichtung eine Recheneinheit, welche beispielsweise als Mikrocontroller, Field Programmable Gate Array (FPGA, zu Deutsch: Programmierbares Logiggatter) oder digitaler Signalprozessor (DSP, Digital Signal Processor) ausgebildet ist. Die Steuereinrichtung beziehungsweise die Recheneinheit kann eine Speichereinheit aufweisen, beispielsweise einen Flash-Speicher, ein magnetisches Speichermedium und/oder ein optisches Speichermedium oder dergleichen, in welchem ein Computerprogrammprodukt gespeichert ist, welches Programmcodemittel zum Durchführen des erfindungsgemäßen Verfahrens oder einzelner Verfahrensschritte des erfindungsgemäßen Verfahrens beinhaltet. Insbesondere sorgen die Programmcodemittel bei einer Ausführung auf der Steuereinrichtung beziehungsweise der Recheneinrichtung die Ausführung des erfindungsgemäßen Verfahrens gemäß einer oder mehrerer Ausführungsformen.

Ein Ausführungsbeispiel der Erfindung betrifft die Fahrzeugbatterie mit

- der oben genannten Steuereinrichtung,
- zumindest einer ersten Batteriezelle und einer jeweiligen Temperaturmesseinheit zum Bestimmen der jeweiligen Messtemperatur jeder ersten Batteriezelle,
- zumindest einer zweiten Batteriezelle, und
- einer Messeinrichtung zum Bestimmen von Messwerten, welche eine erste Spannung einer ersten Batteriezelle und zweite Spannung einer zweiten Batteriezelle sowie einen zumindest einen jeweiligen Strom, der durch die Batteriezellen fließt.

Beispielsweise kann die Fahrzeugbatterie als Lithium-Ionen-Batterie ausgeführt sein. Die Fahrzeugbatterie kann ein Spannungsniveau von mehr als 80 Volt, vorzugsweise mehr als 200 Volt, beispielsweise 400 Volt oder 800 Volt, aufweisen. Insbesondere weist die Fahrzeugbatterie mehrere Temperaturmesseinheiten auf, beispielsweise zwei, drei oder vier. In diesem Fall gelten vier Batteriezellen der Fahrzeugbatterie als erste Batteriezelle im Sinne der vorliegenden Anmeldung. Die jeweilige Temperatur der übrigen Batteriezellen der Fahrzeugbatterie, welche auch als zweite Batteriezellen im Sinne der vorliegenden Anmeldung bezeichnet werden können, wird anhand der jeweiligen Messtemperaturen der ersten Batteriezellen beziehungsweise der einen ersten Batteriezelle extrapoliert.

Weitere Vorteile, Merkmale und Einzelheiten der Erfindung ergeben sich aus der nachfolgenden Beschreibung bevorzugter Ausführungsbeispiele sowie anhand der Zeichnung(en).

Dabei zeigen:

Fig. 1    ein schematisches Blockdiagramm einer Fahrzeugbatterie mit mehreren Batteriezellen, wobei manche der Batteriezellen einen jeweiligen Temperatursensor aufweisen und die Temperatur der übrigen Batteriezellen anhand der gemessenen Temperaturen sowie jeweiligen Widerständen der Batteriezellen extrapoliert wird;

Fig. 2    einen beispielhaften Verfahrensablauf anhand eines Ablaufdiagramms;

Fig. 3    eine beispielhafte experimentell ermittelte Verteilungsfunktion.

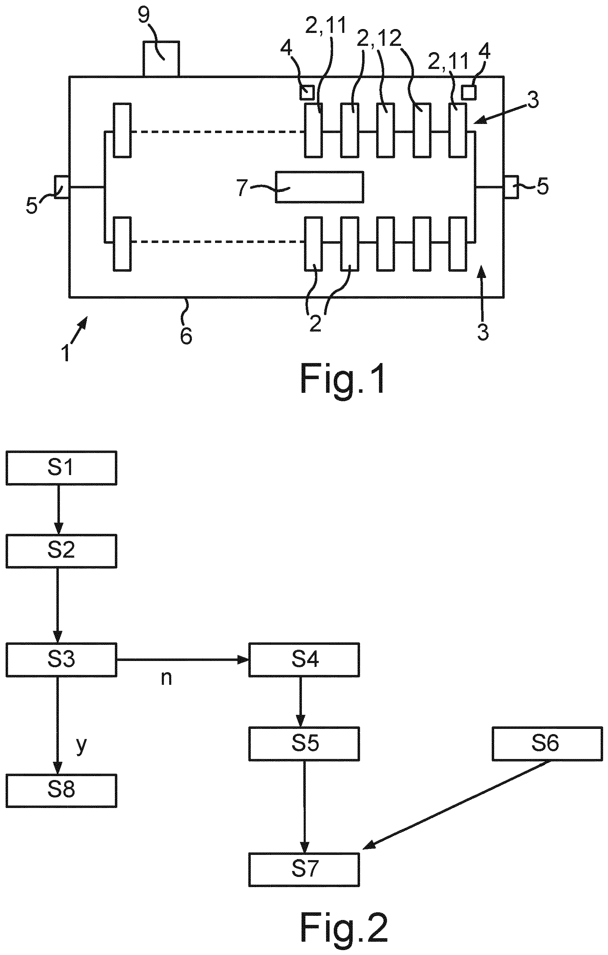

Fig. 1 zeigt eine Fahrzeugbatterie 1 mit einer Vielzahl an Batteriezellen 2 gemäß einer äußerst beispielhaften Ausführungsform. Die Batteriezellen 2 teilen sich auf zwei Gruppen 3 auf, wobei die Batteriezellen 2 einer jeweiligen Gruppe 3 jeweils in Reihe geschaltet sind. Die Gruppen 3 sind wiederum parallel zueinander geschaltet. Selbstverständlich ist auch jede andere sinnvolle Schaltung der Batteriezellen 2 möglich. Insbesondere ist die Fahrzeugbatterie 1 als sogenannte Traktionsbatterie zum Versorgen eines elektrischen Antriebs eines Kraftfahrzeugs mit elektrischer Energie zum Antreiben beziehungsweise Beschleunigen eines Kraftfahrzeugs ausgebildet. Die Fahrzeugbatterie 1 beziehungsweise deren Batteriezellen 2 basieren insbesondere auf der Technologie einer Lithium-Ionen-Batterie.

Die Fahrzeugbatterie 1 weist elektrische Anschlüsse 5 auf, an denen eine Ausgangsspannung der Fahrzeugbatterie 1 anliegt. Insbesondere kann an die elektrische Anschlüsse 5 eine Last, insbesondere Inverter zum Betreiben einer elektrischen Maschine eines Kraftfahrzeugs und/oder ein Spannungswandler zum Versorgen eines Bordnetzes des Kraftfahrzeugs mit elektrischer Energie, angelegt werden. In anderen Worten kann die Fahrzeugbatterie 1 elektrische Energie beziehungsweise eine elektrische Leistung über die elektrischen Anschlüsse 5 nach außen abgeben. Die elektrischen Anschlüsse 5 zum Bereitstellen der elektrischen Leistung können die einzigen Leistungsansprüche sein, die aus einem Batteriegehäuse 6 der Fahrzeugbatterie 1 herausgeführt sind. Die elektrischen Anschlüsse 5 können durch insgesamt zwei Pole bereitgestellt sein. Die Ausgangsspannung der Fahrzeugbatterie 1 beträgt nominell insbesondere mehr als 80 V, bevorzugt mehr als 200 V, beispielsweise 400 V oder 800 V. Bei Verwendung von Batteriezellen 2 auf Lithium-Ionen-Basis leitet sich aus dem gewünschten nominell Spannungsniveau der Ausgangsspannung auch die Anzahl an in Reihe geschalteten Batteriezellen 2 ab.

Um ein hohes Maß an Sicherheit im Betrieb der Fahrzeugbatterie 1 gewährleisten zu können sowie eine Lebensdauer der Fahrzeugbatterie 1 maximieren zu können, ist eine möglichst umfassende Überwachung der Fahrzeugbatterie 1 notwendig. Die Überwachung kann beispielsweise die Ausgangsspannung, einen Stromfluss, eine Temperatur, einen Ladezustand (state of charge, SOC), eine Degradation (state of health, SOH) oder dergleichen betreffen. Besonders bevorzugt ist es, wenn diese Überwachung nicht nur in Bezug auf die gesamte Fahrzeugbatterie 1 sondern zumindest teilweise für jede der Batteriezellen 2 einzeln erfolgt. Auf diese Weise können Schädigungen an einzelnen Batteriezellen 2 erkannt beziehungsweise diesen vorgebeugt werden.

Die Fahrzeugbatterie 1 weist mehrere Temperaturmesseinheiten 4 auf. Die Temperaturmesseinheiten 4 sind einer jeweiligen Batteriezelle 2 zugeordnet. Dabei sind die Temperaturmesseinheiten 4 dazu ausgebildet, die Temperatur der jeweiligen Batteriezellen 2 zu messen. Die Batteriezellen 2, denen eine Temperaturmesseinheit 4 zugeordnet ist, werden auch als erste Batteriezellen 11 bezeichnet. Es ist offensichtlich, dass nur einem Bruchteil der Batteriezellen 2 eine Temperaturmesseinheit 4 zugeordnet ist. Die Batteriezellen 2, denen keine Temperaturmesseinheit 4 zugeordnet ist, werden auch als zweite Batteriezellen 12 bezeichnet. Es sind nur wenige Temperaturmesseinheiten 4 vorgesehen, um eine Komplexität und Herstellungskosten Fahrzeugbatterie 1 möglichst gering zu halten. Andererseits ist es wünschenswert, die jeweilige Temperatur aller Batteriezellen 2 zu bestimmen. Aus diesem Grund wird die gemessene Temperatur der ersten Batteriezellen 11 durch ein Verfahren zum Bestimmen der jeweiligen Temperatur von Batteriezellen der Fahrzeugbatterie 1 auf die zweiten Batteriezellen extrapoliert. Zur Durchführung dieses Verfahrens kann die Fahrzeugbatterie 1 eine entsprechende Steuereinrichtung 9 aufweisen.

Im vorliegenden weist die Fahrzeugbatterie 1 eine Messeinrichtung 7 auf, welche dazu ausgebildet ist, Strom und Spannung der einzelnen Batteriezellen 2 zu messen beziehungsweise zu bestimmen. Dabei kann insbesondere vorgesehen sein, dass eine jeweilige Spannung für jede der Batteriezellen 2 gemessen beziehungsweise bestimmt wird. Es kann vorgesehen sein, dass der Strom für jede der Batteriezellen 2 unabhängig voneinander gemessen wird. Vorzugsweise wird der Strom jedoch für mehrere Batteriezellen 2 gemeinsam gemessen beziehungsweise bestimmt. Aufgrund der Reihenschaltung mehrerer Batteriezellen 2 ist der jeweilige Strom, der durch die in Reihe geschalteten Batteriezellen 2, vorliegend die Batteriezellen 2 einer Gruppe 3, fließt, jeweils gleich. Auf diese Weise kann der Strom jeweils nur einmal für jede der Gruppen 3 gemessen werden. Alternativ kann der Gesamtstrom aller Gruppen 3 gemessen werden und durch die Anzahl der Gruppen 3 geteilt werden, dies erfolgt insbesondere unter der Annahme, dass sich der Gesamtstrom auf alle Gruppen 3 gleichmäßig verteilt. Gemäß einer weiteren Alternative kann der Strom einer Gruppe 3 gemessen werden, und angenommen werden, dass der Strom der anderen Gruppen 3 diesem entspricht. In Bezug auf das Ablaufdiagramm gemäß Fig. 2 entspricht das Messen der genannten Messwerte einem Schritt S1. Alternativ oder zusätzlich werden in dem Schritt S1 die Messwerte durch die Steuereinrichtung 9 empfangen.

Aus den genannten Messwerten, also den jeweiligen Werten für Strom und Spannung, kann ein jeweiliger Widerstand, auch Messwiderstand, für jede der Batteriezellen 2 bestimmt werden. Dies kann beispielsweise basierend auf dem ohmschen Gesetz erfolgen. In anderen Ausführungsbeispielen erfolgt diese gemäß unterschiedlichen formalistischen Ansätzen erfolgen, welche nachfolgend noch genauer erläutert sind. Dieses Bestimmen der jeweiligen Widerstände beziehungsweise Innenwiderstände der einzelnen Batteriezellen 2 entspricht einem Schritt S2.

In einem Schritt S3 wird bestimmt, ob ein Referenzzustand beziehungsweise ein sogenannter "steady state" vorliegt. In diesem Referenzzustand weicht in der vorliegenden Ausführungsform die jeweilige Temperatur der ersten Batteriezellen 11 höchstens um ein vorbestimmtes Maß voneinander ab. Außerdem ist ein Korrelationskoeffizient G in der vorliegenden Ausführungsform in dem Referenzzustand größer als ein vorbestimmter Wert. Auf den Korrelationskoeffizienten G, siehe auch Formel (22), wird im Folgenden noch genauer eingegangen. Wenn ein solcher Referenzzustand vorliegt, wird das Verfahren zum Bestimmen der jeweiligen Temperatur abgebrochen bis Weise auf andere Weise durchgeführt. Es wird in diesem Fall nicht die Temperatur der zweiten Batteriezellen 12 bestimmt, dies entspricht in dem Ablaufdiagramm dem Pfad "n", sondern die Degradation ("state of health") der Batterie bestimmt, was in Fig. 2 dem Pfad "y" entspricht.

In einem weiteren Schritt S6 werden die Temperaturwerte aus den Temperaturmesseinheiten 4 abgerufen beziehungsweise empfangen. Dies erfolgt insbesondere durch die Steuereinrichtung 9. Alternativ oder zusätzlich kann in dem Schritt S6 auch das Messen der Temperaturwerte durch die Temperaturmesseinheiten 4 erfolgen. Der Schritt S6 kann wiederholt durchgeführt werden und/oder vor dem Schritt S3 durchgeführt werden, sodass die Temperaturwerte für den Schritt S3 jeweils in aktueller Form bereitstehen.

Liegt kein Referenzzustand vor, so kann das Verfahren mit einem Schritt 4 fortgesetzt werden. In einem Schritt S4 wird ein Referenzwiderstand bestimmt. Dieser Referenzwiderstand kann beispielsweise ein vorbestimmter Wert sein, der im Rahmen des Schritts S4 aus einer Speichereinheit der Steuereinrichtung 9 abgerufen wird. Im vorliegenden Ausführungsbeispiel wird der Referenzwiderstand aus den Innenwiderständen beziehungsweise Messwiderständen aller Batteriezellen 2 bestimmt. Insbesondere wird der Referenzwiderstand durch Mittelung derselben bestimmt. Mit anderen Worten kann der Referenzwiderstand der Durchschnitt über die Innenwiderstände beziehungsweise Messwiderstände sein.

In dem Schritt S5 wird ein jeweiliges Widerstandsverhältnis für jeden der Innenwiderstände der Batteriezellen 2 bestimmt. Dieses jeweilige Widerstandverhältnis wird durch Teilen des jeweiligen Innenwiderstands beziehungsweise Messwiderstands durch den Referenzwiderstand errechnet. Alternativ kann das jeweilige Widerstandsverhältnis durch Teilen des Referenzwiderstands durch den jeweiligen Innenwiderstand beziehungsweise Messwiderstand errechnet werden.

In dem Verfahrensschritt S7 erfolgt das eigentliche Extrapolieren der Messtemperaturen beziehungsweise der Temperaturwerte bezüglich der ersten Batteriezellen 2. Hierbei wird ausgehend von den Messtemperaturen über die jeweiligen Widerstandsverhältnisse eine jeweilige Rechentemperatur aller zweiter Batteriezellen 12 bestimmt. Dem kann eine vorbestimmte Vorschrift zu Grunde liegen. Insbesondere verknüpft die vorbestimmte Vorschrift die jeweiligen Temperaturen der Batteriezellen 2 mit dem jeweiligen Widerstandsverhältnis. Dabei kann die vorbestimmte Vorschrift eine Wertetabelle und/oder eine Verteilungsfunktion 15 beinhalten. Insbesondere kann die Wertetabelle und/oder Verteilungsfunktion 15 aus entsprechenden Labortests abgeleitet werden. Die Ergebnisse der entsprechenden Labortests können in der Wertetabelle und/oder Verteilungsfunktion numerisch enthalten sein oder durch eine mathematische Funktion nachgebildet sein.

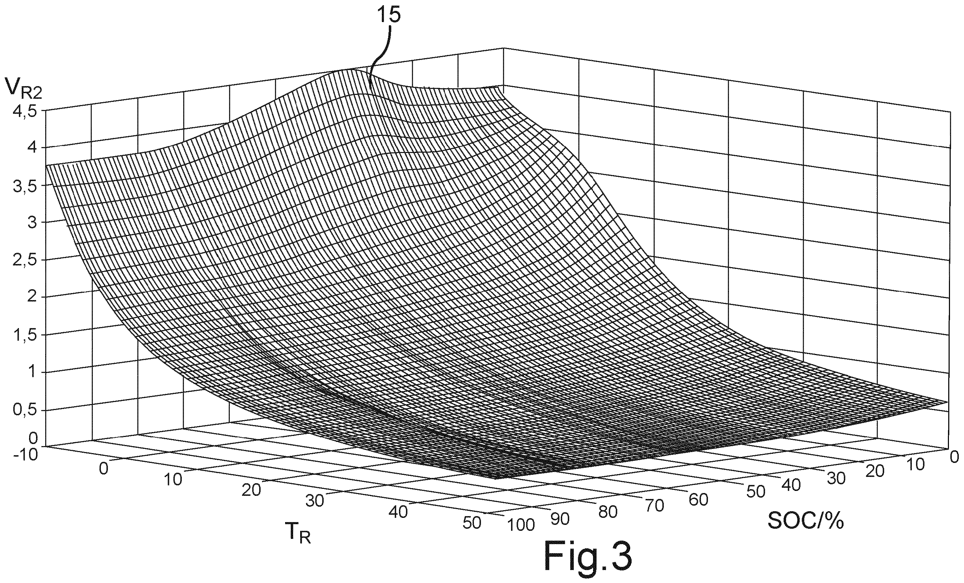

Fig. 3 zeigt eine beispielhafte Verteilungsfunktion 15, welche die Temperatur $T_R$ einer jeweiligen zweiten Batteriezelle 12 abhängig von dem jeweiligen Widerstandsverhältnis $V_{R2}$ der entsprechenden zweiten Batteriezellen 12 und dem Ladezustand SOC angibt. Die beispielhafte Verteilungsfunktion 15 ist dabei basierend auf dem ersten Widerstandsverhältnis und der Messtemperatur einer jeweiligen ersten Batteriezelle 11 als Parameter erzeugt. Mit anderen Worten wird eine Verteilungsfunktion 15 basiert auf der Meßtemperatur und einem ersten Widerstandsverhältnis einer jeweiligen ersten Batteriezelle 11 erzeugt, um daraus die Temperatur $T_R$ einer jeweiligen zweiten Batteriezelle 12 abhängig von deren Widerstandsverhältnis $V_{R2}$ und Ladezustand SOC abzuleiten. In weiterer Ausgestaltung kann dies unabhängig voneinander ausgehend von jeder ersten Batteriezelle 11 für jede zweite Batteriezelle 12 erfolgen. Auf diese Weise werden für jede Batteriezelle 12 so viele Rechentemperaturen erhalten, wie erste Batteriezellen 11 beziehungsweise Temperaturmesseinheiten 4 vorhanden sind. Über diese mehreren Rechentemperaturen jeder Batteriezelle 12 kann eine Mittelung erfolgen. In weiterer Ausgestaltung kann vor dieser Mittelung ein Aussortieren von Ausreißern beziehungsweise stark abweichenden Werten erfolgen. Auf diese Weise ergibt sie eine besonders genaue Bestimmung der Rechentemperatur.

Im Folgenden sollen nun die mathematischen Grundlagen die vorliegende Erfindung genauer beschrieben werden:

A. Algorithmus zum Bestimmen des Widerstandes

Basis der Bestimmung beziehungsweise Berechnung des jeweiligen Innenwiderstands ist eine Unterteilung des Verlaufs der Messgrößen (Strom und Spannung) in eine sofortige Systemantwort $I(t) \cdot R_{Ohm}(t)$ und eine verzögerte Systemantwort $\mathcal{F}(t)$.

$$U(t) = I(t) \cdot R_{\text{Ohm}}(t) + \mathcal{F}(t). \tag{1}$$

Die sofortige Systemantwort ist beschrieben durch die Spannung an dem ohmschen Widerstand $R_{Ohm}(t)$ aufgrund des Stroms $I(t)$. Die verzögerten Systemantwort $\mathcal{F}(t)$ wird widerrum unterteil in einen deterministischen Anteil $\mathcal{F}_{deter}$ und einen stochastischen Rauschanteil $\mathcal{F}_{stoch}$

$$\mathcal{F}(t) = \mathcal{F}_{\text{deter}}(t) + \mathcal{F}_{\text{stoch}}(t) \tag{2}$$

Das verzögerte deterministische Zell-Verhalten kann ausgedrückt werden durch Nutzung eines elektrisches Schaltkreismodell (ECM) mit zwei Widerstandpaaren.

$$\mathcal{F}_{\text{deter}}(t) = \text{OCV}(t) + U_{\text{Pol}}(t) + U_{\text{Diff}}(t),$$

$$\frac{dU_{\text{Pol}}(t)}{dt} = -\frac{1}{R_{\text{Pol}} \cdot C_{\text{Pol}}} \cdot U_{\text{Pol}}(t) + \frac{I(t)}{C_{\text{Pol}}},$$

$$\frac{dU_{\text{Diff}}(t)}{dt} = -\frac{1}{R_{\text{Diff}} \cdot C_{\text{Diff}}} \cdot U_{\text{Diff}}(t) + \frac{I(t)}{C_{\text{Diff}}},$$

$$\frac{\mathrm{dSoC}(t)}{\mathrm{d}t} = \frac{I(t)}{C_N}.$$

Das stochastische Rauschen kann durch ein unabhängiges Gausssches Rauschverfahren mit Mittelwert Null ausgedrückt werden.

$$\mathcal{F}_{\mathrm{stoch}}(t) = \mathcal{N}\left(0, \sigma_{\mathrm{noise}}^2\right) \tag{7}$$

Die Werte der ECM-Parameter $R_{Ohm}$, $R_{Pol}$, $R_{Diff}$, $C_{Pol}$, $C_{Diff}$ und $C_N$ ändern sich im Laufe der Zeit je nach Betriebsbedingungen und Zellzustände. Die Anforderungen an die Anwendung stochastischer Methoden erfordern die Diskretisierung der Spannungs- und Stromsignale in Abtastwerte. Die Abtastgröße n und die Abtastrate Ts müssen zwei Anforderungen erfüllen. Einerseits muss der Stichprobenumfang n groß sein genug, dass die stochastischen Maßnahmen mit einem hohen Konfidenzniveau erfüllt werden, während auf der anderen Seite der ohmsche Widerstand $R_{Ohm}(t)$ und das deterministische Systemverhalten im Zeitintervall der Stichprobe unveränderlich sein müssen $\Delta t = n \cdot T_S$. Auf der Grundlage dieser Anforderungen muss die Gesamtdifferenz des ohmschen Widerstands

$$\Delta R_{\mathrm{Ohm}}(t) = \left.\frac{\partial R_{\mathrm{Ohm}}}{\partial t}\right|_{T_S} \Delta t + \frac{\partial R_{\mathrm{Ohm}}}{\partial T} \cdot \left.\frac{\partial T}{\partial t}\right|_{T_S} \Delta t + \ldots$$
$$\ldots \frac{\partial R_{\mathrm{Ohm}}}{\partial SoC} \cdot \left.\frac{\partial SoC}{\partial t}\right|_{T_S} \Delta t + \frac{\partial R_{\mathrm{Ohm}}}{\partial I} \cdot \left.\frac{\partial I}{\partial t}\right|_{T_S} \Delta t \approx 0, \tag{8}$$

im Stichprobenintervall $\Delta t$ vernachlässigbar klein sein. Die Gesamtdifferenz der verzögerten Systemreaktion führt zu den folgenden Gleichungen

$$\Delta \mathcal{F}(t) = \Delta OCV(t) + \Delta U_{\mathrm{Pol}}(t) + \Delta U_{\mathrm{Diff}}(t) + \Delta \mathcal{F}_{\mathrm{stoch}} \tag{9}$$

Unter der Bedingung, dass die Änderung des OCV

$$\Delta OCV(t) = \left.\frac{\partial OCV}{\partial t}\right|_{T_S} \Delta t + \frac{\partial OCV}{\partial T} \cdot \left.\frac{\partial T}{\partial t}\right|_{T_S} \Delta t + \ldots$$
$$\ldots + \frac{\partial OCV}{\partial SoC} \cdot \left.\frac{\partial SoC}{\partial t}\right|_{T_S} \Delta t + \cdots \approx 0, \tag{10}$$

in kurzen Abständen vernachlässigt wird. Aufgrund der hohen Zeitkonstante des Diffusionsprozesses

$$T_S << \dot{R}_{\mathrm{Diff}} \cdot C_{\mathrm{Diff}} \tag{11}$$

kann das zweite RC-Paar

$$\Delta U_{\mathrm{Diff}}(t) = \left.\frac{\partial U_{\mathrm{Diff}}}{\partial t}\right|_{T_S} \Delta t + \frac{\partial U_{\mathrm{Diff}}}{\partial T} \cdot \left.\frac{\partial T}{\partial t}\right|_{T_S} \Delta t + \ldots$$
$$\ldots + \frac{\partial U_{\mathrm{Diff}}}{\partial SoC} \cdot \left.\frac{\partial SoC}{\partial t}\right|_{T_S} \Delta t + \cdots \approx 0, \tag{12}$$

auch vernachlässigt werden. Die Gesamtveränderung des ersten RC-Paares ist aufgrund der niedrigen Zeitkonstante

$$T_S > R_{\mathrm{Pol}} \cdot C_{\mathrm{Pol}} \tag{13}$$

in weiten Temperatur- und SoC Ladezustands-Bereichen

$$\Delta U_{\mathrm{Pol}}(t) = \left.\frac{\partial U_{\mathrm{Pol}}}{\partial t}\right|_{T_S} \Delta t + \frac{\partial U_{\mathrm{Pol}}}{\partial T} \cdot \left.\frac{\partial T}{\partial t}\right|_{T_S} \Delta t + \dots$$
$$\dots + \frac{\partial U_{\mathrm{Pol}}}{\partial \mathrm{SoC}} \cdot \left.\frac{\partial \mathrm{SoC}}{\partial t}\right|_{T_S} \Delta t + \dots \neq 0 \tag{14}$$

nicht vernachlässigbar. Die Veränderung des stochastischen Messrauschens ist nicht vernachlässigbar. Die Gesamtdifferenz der verzögerten Systemanwort führt zu

$$\Delta \mathcal{F}(t) = \left.\Delta U_{\mathrm{Pol}}(t)\right|_{T_S > R_{\mathrm{Pol}} \cdot C_{\mathrm{Pol}}} + \Delta \mathcal{F}_{\mathrm{stoch}}. \tag{15}$$

Durch Einsetzen der Rückwärtsdifferenzen der diskreten Spannungssignale,

$$\delta U(t) = U(t) - U(t - T_S) = \delta I(t) \cdot R_{\mathrm{Ohm}}(t) + \delta \mathcal{F}(t) \tag{16}$$

Ergebnisse. Zur besseren Übersicht werden die diskreten Signale kombiniert in einem Vektor

$$\delta \vec{U}(t) = [\delta U(t) \quad \delta U(t + T_S) \quad \cdots \quad \delta U(t + n \cdot T_S)]^{\mathbf{T}} \tag{17}$$

mit der Länge der Probegröße n, welche insbesondere der Anzahl an Batteriezellen 2 entspricht. Die Systemgleichung kann nun in einer Vektor-Notation geschrieben werden

$$\delta \vec{U}(t) = R_{\mathrm{Ohm}}(t) \cdot \delta \vec{I}(t) + \delta \vec{\mathcal{F}}(t) \tag{18}$$

Eine Möglichkeit, den ohmschen Widerstand zu bestimmen, ist daher die Kovarianz des Spannungsvektors auf den Stromvektor anzuwenden

$$\frac{\mathrm{Cov}(\delta \vec{U}(t), \delta \vec{I}(t))}{\mathbb{V}(\delta I(t))} = R_{\mathrm{Ohm}}(t) + \frac{\mathrm{Cov}(\delta \vec{\mathcal{F}}(t), \delta \vec{I}(t))}{\mathbb{V}(\delta \vec{I}(t))} \tag{19}$$

mit der Bedingung, dass der aktuelle Stromvektor konstant ist und die Varianz des aktuellen Stromvektors gleich Null ist. Der zweite Term von Gleichung 19 kann mit Hilfe der Gleichungen (9) - (15) angenähert werden:

$$\frac{\mathrm{Cov}(\delta \mathcal{F}(t), \delta I(t))}{\mathbb{V}(\delta \vec{I}(t))} \approx \left.R_{\mathrm{Pol}}(t)\right|_{T_S > R_{\mathrm{Pol}} \cdot C_{\mathrm{Pol}}} \tag{20}$$

So kann die Kovarianz von Zellspannung und -strom wie folgt angenähert werden

$$\frac{\mathrm{Cov}(\delta\vec{U}(t),\delta\vec{I}(t))}{\mathbb{V}(\delta\vec{I}(t))} = R_{\mathrm{ohm}}(t) + R_{\mathrm{Pol}}(t)|_{T_S > R_{\mathrm{Pol}} \cdot C_{\mathrm{Pol}}} \equiv R_I(t) \tag{21}$$

was als Innenwiderstand $R_I(t)$ der jeweiligen Batteriezelle 2 definiert ist. Die Anwendung der Regressionsmethode auf reale Daten erfordert Filtertechniken, da reale Profile Phasen enthalten, in denen der Strom konstant oder Null ist. Unter Anwendung der Methode der kleinsten Quadrate wird der Korrelationskoeffizient zur Bewertung der Qualität einer Regression

$$\mathcal{G}(t) = \frac{\mathrm{Cov}(\delta\vec{U}(t),\delta\vec{I}(t))}{\sqrt{\mathbb{V}(\delta\vec{I}(t)) \cdot \mathbb{V}(\delta\vec{U}(t))}} = R_I(t) \cdot \sqrt{\frac{\mathbb{V}(\delta\vec{I}(t))}{\mathbb{V}(\delta\vec{U}(t))}} \tag{22}$$

als Qualitätsfaktor G basierend auf der Datenbasis jeder Stichprobe zur Bewertung der Abschätzung eingeführt. Diese Anmeldung umfasst zwei verschiedene Techniken der Regressionsmethode. Eine Methode erfordert eine Datensicherung der jeweiligen Probe, um die Kovarianz und den Korrelationskoeffizienten analytisch zu berechnen. Der andere Algorithmus nähert die Kovarianz und den Korrelationskoeffizienten an unter Vermeidung der Notwendigkeit einer Zwischenspeicherung. Die beiden Algorithmen sind nachfolgend vollständig beschrieben, einschließlich verwendeter Filter, Anfangswerte und Definitionen.

B. Zusammenfassung der Regressionsmethode mit Datensicherung (RM)

Notation und Definitionen:

Probenvektor

$$\vec{x}_k = \begin{bmatrix} x_k & x_{k+1} & x_{k+2} & \cdots & x_{k+n_{\mathrm{opt}}} \end{bmatrix}^{\mathrm{T}}$$

für den Strom

$$\delta\vec{I}_k = \vec{I}_k - \vec{I}_{k-1},$$

für die Spannung

$$\delta\vec{U}_k = \vec{U}_k - \vec{U}_{k-1},$$

mit der optimierten Stichprobengröße

$$n_{\mathrm{opt}} = \mathrm{length}\left(\delta\vec{I}_k\right) = \mathrm{length}\left(\delta\vec{I}_k\right)$$

Initialisierung: k = 0

$$R_{I,0}^* = 0$$

Berechnung: k > 0

$$R_{I,k} = \frac{\mathrm{Cov}(\delta\vec{I}_k,\delta\vec{U}_k)}{\mathbb{V}(\delta\vec{I}_k)}$$

$$\mathcal{G}_k = \frac{\mathrm{Cov}(\delta\vec{I}_k, \delta\vec{U}_k)}{\sqrt{\mathbb{V}(\delta\vec{I}_k)\cdot\mathbb{V}(\delta\vec{U}_k)}} = R_{I,k}\cdot\sqrt{\frac{\mathbb{V}(\delta\vec{I}_k)}{\mathbb{V}(\delta\vec{U}_k)}}$$

$$R_{I,k} = \begin{cases} R_{I,k}, & \text{if}\quad \mathbb{V}(\delta\vec{I}_k) \neq 0 \;\cap\; R_{I,k} \in \mathbb{R}^+ \;\cap\; R_{I,k} < \epsilon \\ R_{I,k-1}, & \text{else} \end{cases}$$

$$R_{I,k}^* = (1-\tau)\cdot R_{I,k-1}^* + \tau\cdot R_{I,k}$$

C. Zusammenfassung der rekursiven Regressionsmethode (RRM)

Definitionen:

$$\delta\vec{d}_k = [I_k \quad U_k]^{\mathrm{T}} - [I_{k-1} \quad U_{k-1}]^{\mathrm{T}}.$$

Initialisierung: k = 0

$$R_{I,0}^* = 0,$$

$$\vec{\mu}_0 = [0 \quad 0]^{\mathrm{T}},$$

$$C_0 = \vec{\mu}_0 \otimes \vec{\mu}_0,$$

Berechnung des Ausgangszustandes: $0 \leq k < n_{\mathrm{opt}}$

$$C_{k+1} = (1-\lambda)\cdot\left(C_k + \lambda\cdot(\delta\vec{d}_{k+1} - \vec{\mu}_k)\otimes(\delta\vec{d}_{k+1} - \vec{\mu}_k)\right),$$

$$\vec{\mu}_{k+1} = (1-\lambda)\cdot\vec{\mu}_k + \lambda\cdot\delta\vec{d}_{k+1},$$

Berechnung für: $k \geq n_{\mathrm{opt}}$

$$R_{I,k} = \frac{C_k(1,2)}{C_k(1,1)}$$

$$\mathcal{G}_k = \frac{C_k(1,2)}{\sqrt{C_k(1,1)\cdot C_k(2,2)}} = R_{I,k}\cdot\sqrt{\frac{C_k(1,1)}{C_k(2,2)}}$$

$$R_{I,k} = \begin{cases} R_{I,k}, & \text{if}\quad C_k(1,1) \neq 0 \;\cap\; R_{I,k} \in \mathbb{R}^+ \;\cap\; R_{I,k} < \epsilon \\ R_{I,k-1}, & \text{else} \end{cases}$$

$$R^*_{I,k} = (1 - |\tau|) \cdot R^*_{I,k-1} + \tau \cdot R_{I,k}$$

$$C_{k+1} = (1 - \lambda) \cdot \left( C_k + \lambda \cdot (\delta \vec{d}_{k+1} - \vec{\mu}_k) \otimes (\delta \vec{d}_{k+1} - \vec{\mu}_k) \right),$$

$$\vec{\mu}_{k+1} = (1 - \lambda) \cdot \vec{\mu}_k + \lambda \cdot \delta \vec{d}_{k+1},$$

### D. Degradations- (SoH-) und Temperaturschätzung

Die Ausgabe der beschriebenen datenbasierten Algorithmen führt zu einer Widerstandsverteilung $\overrightarrow{R_{I,k}}$ der Lithium-Ionen-Zellen innerhalb der Fahrzeugbatterie 1. Diese Verteilung setzt sich zusammen aus Degradation (SoH) und TemperaturGradienten sowie Toleranzen bei Zellfertigung und Moduldesign. Um zwischen diesen Ursprüngen zu unterscheiden, wird eine Referenzverteilung

$$\overrightarrow{\mathcal{N}_{\text{Ref},j}} = \overrightarrow{R_{I,k,j}} . / \overline{\overrightarrow{R_{I,k,j}}} \qquad (23)$$

in einen entspannten Zustand versetzt. Der Index j repräsentiert den jeweiligen Zyklus. Kurzfristige Änderungen dieser Referenzverteilung

$$\overrightarrow{\mathcal{RR}} = \overrightarrow{\mathcal{N}_j} . / \overrightarrow{\mathcal{N}_{\text{Ref},j}} \qquad (24)$$

können auf Temperaturgradienten innerhalb der Batterie zurückgeführt werden. Langfristige Verschiebungen zwischen folgenden Referenzverteilungen

$$\overrightarrow{\mathcal{RR}} = \overrightarrow{\mathcal{N}_{\text{Ref},j}} . / \overrightarrow{\mathcal{N}_{\text{Ref},j-1}} \qquad (25)$$

beschreiben einen Alterungsratengradienten, welcher Einfluss auf die Degradation bzw. den SoH hat.

Bezugszeichenliste

| | |
|---|---|
| 1 | Fahrzeugbatterie |
| 2 | Batteriezelle |
| 3 | Gruppe |
| 4 | Temperaturmesseinheit |
| 5 | Anschlüsse |
| 6 | Batteriegehäuse |
| 7 | Messeinrichtung |
| 9 | Steuereinrichtung |
| 11 | erste Batteriezelle |
| 12 | zweite Batteriezelle |
| 15 | Verteilungfunktion |

**Patentansprüche**

1. Verfahren zum Bestimmen der jeweiligen Temperatur mehrerer Batteriezellen (2) einer Fahrzeugbatterie (1), mit den Schritten:

   - Bestimmen (S1) von Messwerten, welche eine erste Spannung zumindest einer ersten Batteriezelle (11) und zweite Spannung zumindest einer zweiten Batteriezelle (12) sowie zumindest einen jeweiligen Strom, der durch die Batteriezellen (11, 12) fließt, umfasst,
   - Bestimmen (S2) eines ersten Messwiderstands der ersten Batteriezelle (11) und eines zweiten Messwiderstands der zweiten Batteriezelle (12) aus den Messwerten,
   - Bestimmen (S4) eines Referenzwiderstands,
   - Bestimmen (S5) eines ersten Widerstandsverhältnisses aus dem erstem Messwiderstand und dem Referenzwiderstand und eines zweiten Widerstandsverhältnisses aus dem zweiten Messwiderstand und dem Referenzwiderstand,
   - Bestimmen (S6) einer Messtemperatur der ersten Batteriezelle (11), und
   - Bestimmen (S7) einer Rechentemperatur der zweiten Batteriezelle (12) anhand der Messtemperatur sowie dem ersten Widerstandsverhältnis und dem zweiten Widerstandsverhältnis nach einer vorbestimmten Vorschrift, wobei die vorbestimmte Vorschrift eine Verteilungsfunktion (15) und/oder Wertetabelle beinhaltet, welche abhängig von der Messtemperatur sowie dem ersten Widerstandsverhältnis einer Vielzahl an Werten für das zweiten Widerstandsverhältnis genau einen jeweiligen Wert für die Temperatur zuordnet.

2. Verfahren nach Anspruch 1,
   **dadurch gekennzeichnet, dass**
   der Referenzwiderstand als Durchschnittswert über alle Messwiderstände der mehreren Batteriezellen (2), beispielsweise den ersten Messwiderstand und den zweiten Messwiderstand, gebildet wird.

3. Verfahren nach Anspruch 1 oder 2,
   **dadurch gekennzeichnet, dass**
   abhängig von dem ersten Widerstandsverhältnis und der Messtemperatur zunächst die Verteilungsfunktion (15) und/oder Wertetabelle normiert wird und anschließend aus der normierten Verteilungsfunktion (15) und/oder Wertetabelle die Rechentemperatur abhängig von dem zweiten Widerstandsverhältnis abgeleitet wird.

4. Verfahren nach einem der vorhergehenden Ansprüche,
   **dadurch gekennzeichnet, dass**
   ein jeweiliges zweites Widerstandsverhältnis für mehrere zweite Batteriezellen (12) bestimmt und daraus sowie anhand der vorbestimmten Vorschrift, der Messtemperatur und dem ersten Widerstandsverhältnis ein jeweiliger Wert für die Rechentemperatur der jeweiligen zweiten Batteriezelle (12) bestimmt wird.

5. Verfahren nach einem der vorhergehenden Ansprüche,
   **dadurch gekennzeichnet, dass**
   eine jeweilige Messtemperatur sowie ein jeweiliges erstes Widerstandsverhältnis für mehrere erste Batteriezellen (11) bestimmt und daraus anhand der vorbestimmten Vorschrift und dem zweiten Widerstandsverhältnis ein jeweiliger Wert für die Rechentemperatur der zweiten Batteriezelle (12) bestimmt wird.

6. Verfahren nach Anspruch 5,
   **dadurch gekennzeichnet, dass**
   zumindest eine Messtemperatur einer am Rand der Fahrzeugbatterie (1) angeordneten der mehreren ersten Batteriezellen (11) sowie zumindest eine Messtemperatur einer mittig in der Fahrzeugbatterie angeordneten der mehreren ersten Batteriezellen (11) bestimmt wird.

7. Verfahren nach einem der vorhergehenden Ansprüche,
   **dadurch gekennzeichnet, dass**
   geprüft wird (S3), ob ein Referenzzustand vorliegt, wobei in dem Referenzzustand ein Korrelationskoeffizient G größer ist als ein vorbestimmter Wert und/oder jeweilige Messtemperaturen mehrerer erster Batteriezellen untereinander ein vorbestimmtes Maß nicht überschreiten.

8. Steuereinrichtung (9) zum Bestimmen der jeweiligen Temperatur mehrerer Batteriezellen (2) einer Fahrzeugbatterie (1), wobei die Steuereinrichtung (1) ausgebildet ist zum:

- Empfangen von Messwerten, welche eine erste Spannung zumindest einer ersten Batteriezelle (11) und zweite Spannung zumindest einer zweiten Batteriezelle (12) sowie zumindest einen jeweiligen Strom, der durch die Batteriezellen fließt, umfasst,

- Bestimmen eines ersten Messwiderstands der ersten Batteriezelle (11) und eines zweiten Messwiderstands der zweiten Batteriezelle (12) aus den Messwerten,

- Bestimmen eines Referenzwiderstands,

- Bestimmen eines ersten Widerstandsverhältnisses aus dem erstem Messwiderstand und dem Referenzwiderstand und eines zweiten Widerstandsverhältnisses aus dem zweiten Messwiderstand und dem Referenzwiderstand,

- Empfangen einer Messtemperatur der ersten Batteriezelle (11), und

- Bestimmen einer Rechentemperatur der zweiten Batteriezelle (12) anhand der Messtemperatur sowie dem ersten Widerstandsverhältnis und dem zweiten Widerstandsverhältnis nach einer vorbestimmten Vorschrift, wobei die vorbestimmte Vorschrift eine Verteilungsfunktion (15) und/oder Wertetabelle beinhaltet, welche abhängig von der Messtemperatur sowie dem ersten Widerstandsverhältnis einer Vielzahl an Werten für das zweiten Widerstandsverhältnis genau einen jeweiligen Wert für die Temperatur zuordnet.

9. Fahrzeugbatterie (1) mit

- der Steuereinrichtung (9) nach Anspruch 8,

- zumindest einer ersten Batteriezelle (11) und einer jeweiligen Temperaturmesseinheit zum Bestimmen der jeweiligen Messtemperatur jeder ersten Batteriezelle (11),

- zumindest einer zweiten Batteriezelle (12), und

- einer Messeinrichtung zum Bestimmen von Messwerten, welche eine erste Spannung einer ersten Batteriezelle (11) und zweite Spannung einer zweiten Batteriezelle (12) sowie einen zumindest einen jeweiligen Strom, der durch die Batteriezellen (11, 12) fließt.

**Claims**

1. Method for determining the respective temperature of a plurality of battery cells (2) of a vehicle battery (1), comprising the steps of:

- determining (S1) measured values which comprise a first voltage of at least one first battery cell (11) and a second voltage of at least one second battery cell (12) as well as at least one respective current flowing through the battery cells (11, 12),

- determining (S2) a first measured resistance of the first battery cell (11) and a second measured resistance of the second battery cell (12) from the measured values,

- determining (S4) a reference resistance,

- determining (S5) a first resistance ratio from the first measured resistance and the reference resistance and a second resistance ratio from the second measured resistance and the reference resistor,

- determining (S6) a measured temperature of the first battery cell (11), and

- determining (S7) a computing temperature of the second battery cell (12) on the basis of the measured temperature as well as the first resistance ratio and the second resistance ratio according to a predetermined rule, wherein the predetermined rule contains a distribution function (15) and/or value table which, depending on the measured temperature as well as the first resistance ratio, assigns exactly one respective value for the temperature to a number of values for the second resistance ratio.

2. Method according to claim 1,
**characterized in that**
the reference resistance is formed as an average value over all the measured resistances of the plurality of battery cells (2), for example the first measured resistance and the second measured resistance.

3. Method according to either claim 1 or claim 2,
**characterized in that**
depending on the first resistance ratio and the measured temperature, the distribution function (15) and/or value table is first normalized and then the computing temperature is derived from the normalized distribution function (15) and/or value table depending on the second resistance ratio.

**4.** Method according to any of the preceding claims,
**characterized in that**
a respective second resistance ratio for a plurality of second battery cells (12) is determined and a respective value for the computing temperature of the respective second battery cell (12) is determined from this second resistance ratio as well as from the predetermined rule, the measured temperature and the first resistance ratio.

**5.** Method according to any of the preceding claims,
**characterized in that**
a respective measured temperature as well as a respective first resistance ratio is determined for a plurality of first battery cells (11) and a respective value for the computing temperature of the second battery cell (12) is determined from these on the basis of the predetermined rule and the second resistance ratio.

**6.** Method according to claim 5,
**characterized in that**
at least one measured temperature of one of the plurality of first battery cells (11) arranged at the edge of the vehicle battery (1) and at least one measured temperature of the plurality of first battery cells (11) arranged centrally in the vehicle battery is determined.

**7.** Method according to any of the preceding claims,
**characterized in that**

it is checked (S3) whether a reference state is present, a correlation coefficient G being greater than a predetermined value in the reference state, and/or
respective measured temperatures of a plurality of first battery cells do not exceed a predetermined level among one another.

**8.** Control device (9) for determining the respective temperature of a plurality of
battery cells (2) of a vehicle battery (1), wherein the control device (1) is designed to:

- receive measured values which comprise a first voltage of at least one first battery cell (11) and second voltage of at least one second battery cell (12) as well as at least one respective current flowing through the battery cells,
- determine a first measured resistance of the first battery cell (11) and a second measured resistance of the second battery cell (12) from the measured values,
- determine a reference resistance,
- determine a first resistance ratio from the first measured resistance and the reference resistance and a second resistance ratio from the second measured resistance and the reference resistance,
- receive a measured temperature of the first battery cell (11), and
- determine a computing temperature of the second battery cell (12) on the basis of the measured temperature as well as the first resistance ratio and the second resistance ratio according to a predetermined rule, wherein the predetermined rule contains a distribution function (15) and/or value table which, depending on the measured temperature as well as the first resistance ratio, assigns exactly on respective value for the temperature to a number of values for the second resistance ratio.

**9.** Vehicle battery (1), comprising

- the control device (9) according to claim 8,
- at least one first battery cell (11) and a respective temperature-measuring unit for determining the respective measured temperature of each first battery cell (11),
- at least one second battery cell (12), and
- a measuring device for determining measured values which comprise a first voltage of a first battery cell (11) and a second voltage of a second battery cell (12) as well as an at least one respective current flowing through the battery cells (11, 12).

**Revendications**

**1.** Procédé de détermination de la température respective de plusieurs cellules de batterie (2) d'une batterie de véhicule (1), comportant les étapes :

- détermination (S1) de valeurs de mesure qui comprennent une première tension d'au moins une première cellule de batterie (11) et une seconde tension d'au moins une seconde cellule de batterie (12) ainsi qu'au moins un courant respectif qui traverse les cellules de batterie (11, 12),

- détermination (S2), à partir des valeurs de mesure, d'une première résistance de mesure de la première cellule de batterie (11) et d'une seconde résistance de mesure de la seconde cellule de batterie (12),

- détermination (S4) d'une résistance de référence,

- détermination (S5) d'un premier rapport de résistance à partir de la première résistance de mesure et de la résistance de référence et d'un second rapport de résistance à partir de la seconde résistance de mesure et de la résistance de référence,

- détermination (S6) d'une température de mesure de la première cellule de batterie (11), et

- détermination (S7) d'une température calculée de la seconde cellule de batterie (12) à l'aide de la température de mesure ainsi que du premier rapport de résistance et du second rapport de résistance selon une prescription prédéterminée, dans lequel la prescription prédéterminée contient une fonction de distribution (15) et/ou une table de valeurs, laquelle attribue exactement une valeur respective pour la température, en fonction de la température de mesure ainsi que du premier rapport de résistance, à une pluralité de valeurs pour le second rapport de résistance.

2. Procédé selon la revendication 1,
   **caractérisé en ce que**
   la résistance de référence est formée comme valeur moyenne par l'ensemble des résistances de mesure de la pluralité de cellules de batterie (2), par exemple par la première résistance de mesure et la seconde résistance de mesure.

3. Procédé selon la revendication 1 ou 2,
   **caractérisé en ce que**
   la fonction de distribution (15) et/ou la table de valeurs sont d'abord normalisées en fonction du premier rapport de résistance et de la température de mesure et ensuite, à partir de la fonction de distribution (15) et/ou de la table de valeurs normalisées, la température calculée est déduite en fonction du second rapport de résistance.

4. Procédé selon l'une des revendications précédentes,
   **caractérisé en ce que**
   un second rapport de résistance respectif est déterminé pour une pluralité de secondes cellules de batterie (12) et, sur cette base et en fonction de la prescription prédéterminée, de la température de mesure et du premier rapport de résistance, une valeur respective est déterminée pour la température calculée de la seconde cellule de batterie (12) respective.

5. Procédé selon l'une des revendications précédentes,
   **caractérisé en ce que**
   une température de mesure respective ainsi qu'un premier rapport de résistance respectif sont déterminés pour une pluralité de premières cellules de batterie (11) et, sur cette base et en fonction de la prescription prédéterminée et du second rapport de résistance, une valeur respective est déterminée pour la température calculée de la seconde cellule de batterie (12).

6. Procédé selon la revendication 5,
   **caractérisé en ce que**
   il est déterminé au moins une température de mesure de l'une des nombreuses premières cellules de batterie (11) disposées sur le bord de la batterie de véhicule (1) ainsi qu'au moins une température de mesure de l'une des nombreuses premières cellules de batterie (11) disposées au centre de la batterie de véhicule.

7. Procédé selon l'une des revendications précédentes,
   **caractérisé en ce que**

   il est vérifié (S3) s'il existe un état de référence, dans lequel dans l'état de référence, un coefficient de corrélation G est supérieur à une valeur prédéterminée et/ou
   des températures de mesure respectives de plusieurs premières cellules de batterie ne dépassent pas entre elles un degré prédéterminé.

8. Dispositif de commande (9) pour la détermination de la température respective de plusieurs cellules de batterie (2) d'une batterie de véhicule (1), dans lequel le dispositif de commande (1) est conçu pour :

- recevoir des valeurs de mesure qui comprennent une première tension d'au moins une première cellule de batterie (11) et une seconde tension d'au moins une seconde cellule de batterie (12) ainsi qu'au moins un courant respectif qui traverse les cellules de batterie,
- déterminer, à partir des valeurs de mesure, une première résistance de mesure de la première cellule de batterie (11) et une seconde résistance de mesure de la seconde cellule de batterie (12),
- déterminer une résistance de référence,
- déterminer un premier rapport de résistance à partir de la première résistance de mesure et de la résistance de référence et un second rapport de résistance à partir de la seconde résistance de mesure et de la résistance de référence,
- recevoir une température de mesure de la première cellule de batterie (11), et
- déterminer une température calculée de la seconde cellule de batterie (12) à l'aide de la température de mesure ainsi que du premier rapport de résistance et du second rapport de résistance selon une prescription prédéterminée, dans lequel la prescription prédéterminée contient une fonction de distribution (15) et/ou une table de valeurs, laquelle attribue exactement une valeur respective pour la température, en fonction de la température de mesure ainsi que du premier rapport de résistance, à une pluralité de valeurs pour le second rapport de résistance.

9. Batterie de véhicule (1), comportant

- le dispositif de commande (9) selon la revendication 8,
- au moins une première cellule de batterie (11) et une unité de mesure de température respective permettant de déterminer la température de mesure respective de chaque première cellule de batterie (11),
- au moins une seconde cellule de batterie (12), et
- un dispositif de mesure permettant de déterminer des valeurs de mesure qui comprennent une première tension d'une première cellule de batterie (11) et une seconde tension d'une seconde cellule de batterie (12) ainsi qu'au moins un courant respectif qui traverse les cellules de batterie (11, 12).

Fig.1

Fig.2

Fig.3

EP 4 173 071 B1

**IN DER BESCHREIBUNG AUFGEFÜHRTE DOKUMENTE**

**In der Beschreibung aufgeführte Patentdokumente**

- EP 3008771 A1
- US 2017012327 A1
- DE 102011116779 A1
- DE 102011102360 A1
- DE 102016111547 A1